# EUROPEAN PATENT APPLICATION

(11) **EP 2 017 728 A2**
(43) Date of publication of application: **21.01.2009**
(21) Application number: 08160431.6
(22) Date of filing: 15.07.2008
(51) Int. Cl.: G06F 9/445

(54) **Method for restoring program and video apparatus applying the same**

(30) Priority: 16.07.2007 KR 20070071339
(71) Applicant: Samsung Electronics Co., Ltd., Suwon-si, Gyeonggi-Do (KR)
(72) Inventor: Kim, Jae-won c/o 416, Maetan-dong, Suwon-si Gyeonggi-do (KR)
(74) Representative: D'Halleweyn, Nele Veerle Trees Gertrudis

(57) **Abstract**

A program restore method and a video apparatus using the same are provided. The video apparatus includes a first storage unit which stores backup programs, a second storage unit which stores executing programs, and a main control unit which reads out programs from the first storage unit and stores the read programs in the second storage unit, if a program restore command is received while there is no video being currently replayed by the video apparatus. As a result, a user can restore programs even when a video apparatus does not operate normally, by using a panel key or remote controller provided along with the video apparatus.

## Description

### CROSS-REFERENCE TO RELATED APPLICATION

This application claims priority from Korean Patent Application No. 2007-0071339, filed July 16, 2007 in the Korean Intellectual Property Office, the entire disclosure of which is hereby incorporated by reference.

### BACKGROUND OF THE INVENTION

### 1. Field of the Invention

Methods and apparatuses consistent with the present invention relate to controlling a video apparatus, and more particularly, to a method for restoring a program used in a video apparatus, and a video apparatus applying the same.

### 2. Description of the Related Art

A video apparatus operates to replay or record a video from a recording medium or an external device. Video and broadcast technologies have advanced so rapidly that a video apparatus needs more than programs built therein to represent the video at high fidelity, or to properly replay a broadcast being provided by a broadcasting station.

In order to meet the fast updates of technologies, programs may be updated/upgraded by a service technician or updated programs may be downloaded from a distributor's website.

However, many unexpected problems can occur, particularly when the user downloads the programs for upgrade. For example, a video apparatus may not operate as a user expected, even after the program upgrade is complete and checked. Because a user is unable to restore the program due to the video apparatus not operating properly, the user needs a service technician to replace the hardware, or to carry out a rather complicated restoring process after generally connecting a laptop computer to the video apparatus.

### SUMMARY OF THE INVENTION

Exemplary embodiments of the present invention overcome the above disadvantages and other disadvantages not described above. Also, the present invention is not required to overcome the disadvantages described above, and an exemplary embodiment of the present invention may not overcome any of the problems described above.

The present invention provides a control method of a video apparatus which executes previously installed programs, if upgraded programs fail to work properly, and a video apparatus applying the same.

According to an aspect of the present invention, there is provided a video apparatus for replaying a video, including a first storage unit which stores backup programs, a second storage unit which stores executing programs, and a main control unit which reads out programs from the first storage unit and stores the read programs to the second storage unit, upon receiving a program restore command while there is no video being currently replayed by the video apparatus.

The video apparatus may further include a manipulation unit which receives a user command, and a sub-control unit which transmits the program restore command input through the manipulation unit to the main control unit.

The video apparatus may also further include a manipulation unit which receives a user command, and a sub-control unit which transmits a user command input through the manipulation unit to the main control unit, and generates a program restore command and sends it to the main control unit, if a response to the user command is received from the main control unit indicating that the executing programs of the second storage unit contain an error.

The video apparatus may further include a function unit which replays a video. The main control unit may control the function unit using the programs of the second storage unit.

The backup programs may include a program input at the factory, or a program which is stored in the second storage unit and which contains no error.

The executing programs may include a program input at the factory, or a program downloaded from an external device.

The video apparatus may be a broadcast receiving apparatus.

According to an aspect of the present invention, there is provided a method for controlling a video apparatus which comprises a first storage unit which stores backup programs, and a second storage unit which stores executing programs, in which the method may include receiving a program restore command in a state that the video apparatus does not replay a video, reading out programs from the first storage unit, and storing the read programs to the second storage unit in lieu of the previous programs of the second storage.

The method may further include replaying the video using the programs stored in the storing.

The method may also further include receiving the program restore command from an external source.

The method may also further include receiving a video replay command from an external source, determining whether the executing programs of the second storage unit contain an error, and receiving the program restore command, if it is determined that the executing programs contain an error.

The backup programs may include a program input at the factory, or a program which is stored in the second storage unit and which contains no error.

The executing programs may include a program input at the factory, or a program downloaded from an external device.

### BRIEF DESCRIPTION OF THE DRAWINGS

The above and other aspects of the present invention will be more apparent from the following detailed description of exemplary embodiments with reference to the accompanying drawings, in which:

FIG. 1 is a block diagram of a broadcast receiving apparatus as an example of a video apparatus according to an exemplary embodiment of the present invention;

FIG. 2 is a flowchart provided to explain a method for utilizing the previously installed programs if a current program has an error according to an exemplary embodiment of the present invention;

FIG. 3 is a flowchart provided to explain a method for automatically utilizing the previously installed programs if a current program has an error according to another exemplary embodiment of the present invention; and

FIG. 4 is a block diagram of a video apparatus according to an exemplary embodiment of the present invention; and

FIG. 5 is a flowchart provided to explain a control method of a video apparatus according to an exemplary embodiment of the present invention.

Throughout the drawings, the same drawing reference numerals will be understood to refer to the same elements, features, and structures.

### DETAILED DESCRIPTION OF EXEMPLARY EMBODIMENTS

The matters defined in the description such as a detailed construction and elements are provided to assist in a comprehensive understanding of exemplary embodiments of the invention. Accordingly, those of ordinary skill in the art will recognize that various changes and modifications of the embodiments described herein can be made without departing from the scope and spirit of the invention. Also, descriptions of well-known functions and constructions are omitted for clarity and conciseness.

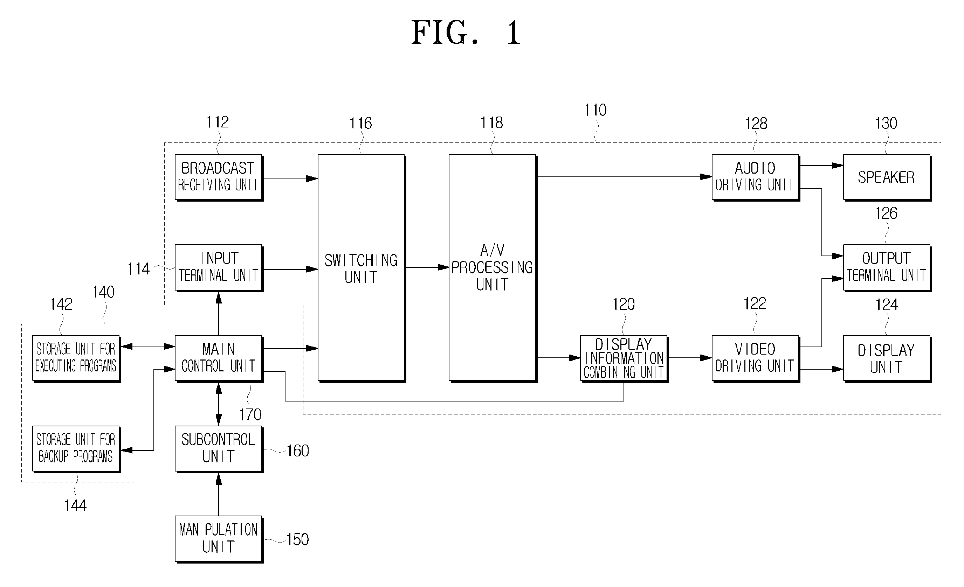

FIG. 1 is a block diagram of a broadcast receiving apparatus as an example of a video apparatus according to an exemplary embodiment of the present invention.

Referring to FIG. 1, a broadcast receiving apparatus according to an exemplary embodiment of the present invention includes a function unit 110, a storage unit 140, a manipulation unit 150, a sub-control unit 160, and a main control unit 170.

The function unit 110 carries out basic functions of a broadcast receiving apparatus, and includes a broadcast receiving unit 112, an input terminal unit 114, a switching unit 116, an audio/visual (A/V) processing unit 118, a display information combining unit 120, a video driving unit 122, a display unit 124, an output terminal unit 126, an audio driving unit 128, and a speaker 130.

The broadcast receiving unit 112 tunes to and decodes a TV broadcast. The input terminal unit 114 provides a communication interface to connect external devices for communication. The external devices may include a personal computer (PC), a camera, camcorder, a digital versatile disk (DVD) player, a personal music player (PMP), a hard disk drive (HDD) player, a Universal Serial Bus (USB) memory stick and a memory card. Further, other various types of devices that include a video recording medium therein may also be applied as the external devices.

The switching unit 116 outputs one of the input signals received from the broadcast receiving unit 112 and the input terminal unit 114 to the A/V processing unit 118, according to the control of the main control unit 170.

The display information combining unit 120 combines a video signal output from the A/V processing unit 118 with display information such as texts, symbols, shapes or graphics. The display information combining unit 120 may utilize an on-screen display (OSD) in combining the display information with the video signal. The display information combining unit 120 operates according to the control of the main control unit 170.

The video driving unit 122 transmits the video signal combined with the display information output from the display information combining unit 120 to a connected external device (not illustrated) through the output terminal unit 126 or the display unit 124.

The audio driving unit 128 may output an audio signal output from the A/V processing unit 118 to the speaker 130, or to another connected external device (not illustrated) through the output terminal unit 126.

The storage unit 140 includes a storage unit 142 for executing programs, and another storage unit 144 for backup programs.

The executing programs may include programs used by the main control unit 170 to control the function unit 110, programs prestored at a factory, or upgrade programs downloaded externally. The executing programs may operate the function unit 110 normally, but the programs may contain a bug-generated error.

The backup programs may include programs that may be used by the main control unit 170 to control the function unit 110, or programs unlikely to be used by the main control unit 170 to control the function unit 110 as long as these programs are left stored in the storage unit 144. The backup programs may also be prestored at the factory. Alternatively, the backup programs may be downloaded from an external source, stored in the storage unit 142 for executing programs, and transferred for storage in the storage unit 144 for backup programs upon being determined to be error-free programs.

The externally downloaded upgrade programs are kept as the backup programs, only when these programs are complete programs that are free from errors such as a bug. In one example of determining whether the programs are complete or not, the main control unit 170 controls the function unit 110 using the above-mentioned programs. Upon determining that the function unit 110 operates normally, the main control unit 170 confirms that the programs are complete, and accordingly, stores the programs of the storage unit 142 for executing programs to the storage unit 144 for backup programs. This enables upgrade of even the backup programs.

The programs downloaded from an external source and stored in the storage unit 142 for executing programs, but yet to be verified by the main control unit 170 for their completeness may be called as the current programs, because these programs are being currently applied to the function unit 110. Therefore, the programs stored in the storage unit 144 for backup programs may be called as the previous programs, because these have been upgraded in advance to the current programs. In the following description, the executing programs stored in the storage unit 142 will be called the "current programs," and the backup programs will be called the "previous programs" for convenience of explanation.

The manipulating unit 150 receives operation commands from a user and transmits these to the sub-control unit 160. The manipulating unit 150 may be integrated with a video apparatus, or provided separately. The manipulating unit 150 may be implemented as a user interface to enable a user to input a command through a menu screen. Additionally, the manipulating unit 150 may also be implemented as a combination of a remote controller to input user commands, and a light receiving unit to receive the output signal from the remote controller and transmit it to the sub-control unit 160.

The sub-control unit 160 checks the user command received from the manipulating unit 150. For example, the sub-control unit 160 may determine whether the user command directs to replay a video stored at an external device, or to receive a broadcast, and generate the user command into a simpler form of data packet to apply it to the main control unit 170. If the sub-control unit 160 receives a program restore command through the manipulating unit 150, the sub-control unit 160 sends the program restore command to the main control unit 170. If the sub-control unit 170 receives a response from the main control unit 170, indicating that the current programs are not available, the sub-control unit 170 may generate and send the program restore command to the main control unit 170.

The main control unit 170 controls the operation of the broadcast receiving apparatus according to a command received from the sub-control unit 160.

In particular, the main control unit 170 controls the function unit 110 to replay video data that includes both the video and audio signals. The main control unit 170 uses the current programs stored in the storage unit 142 for executing programs in controlling the function unit 110. Also in response to a program restore command received from the sub-control unit 160, the main control unit 170 reads out the previous programs from the storage unit 144 for backup programs, and stores the read programs in the storage unit 142 for executing programs to upgrade the programs stored therein. The main control unit 170 generates a message indicating that the broadcast receiving apparatus is set with the previous programs, and sends the message to the display information combining unit 120.

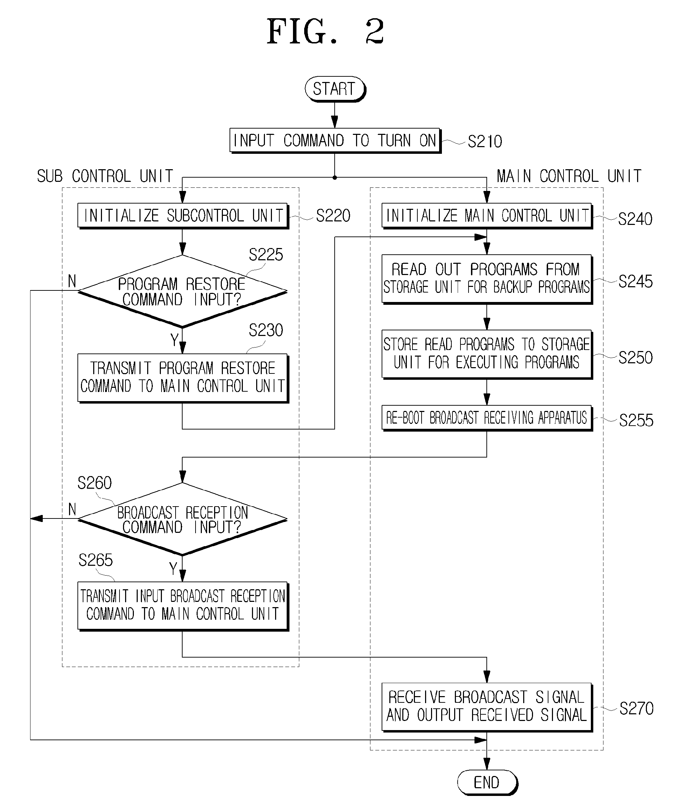

The broadcast receiving apparatus of FIG. 1 utilizing the previous programs as the executing programs will be explained in detail below with reference to FIG. 2. FIG. 2 is a flowchart provided to explain a method for utilizing the previously installed programs if a current program has an error according to an exemplary embodiment of the present invention.

At operation S210, the broadcast receiving apparatus receives a command to turn on. Accordingly, the sub control unit 160 and the main control unit 170 perform initialization at operations S220 and S240, respectively. The sub-control unit 160 and the main control unit 170 may desirably have required data stored in a storage unit (not illustrated) provided therein.

At operation S225, the sub-control unit 160 determines whether a program restore command is input. For example, a user may input a command to receive a broadcast as the user turns on the broadcast receiving apparatus, but may see no video on the display unit 124 and accordingly presume that a broadcast is not properly received. In this case, the user may input a program restore command by manipulating a corresponding key or a combination of the keys on a key panel of the remote controller. As a result, the sub-control unit 160 determines that a program restore command is input. In the following description, it is exemplified that the broadcast is not properly received because the programs are not executed properly due to problems such as a bug after the successful upgrade processing.

Upon determining that a program restore command is input at operation S225-Y, the sub-control unit 160 transmits to the main control unit 170 a message that includes the program restore command at operation S230.

At operation S245, the main control unit 170 reads out the previous program from the storage unit 144 for backup programs in response to the program restore command. At operation S250, the main control unit 170 stores the read previous programs to the storage unit 142 for executing programs. In particular, the main control unit 170 stores the previous programs to the storage unit 142 for executing programs by deleting the current program which is already stored in the storage unit 142 but contains an error, and by storing the previous programs read out from the storage unit 144 for backup programs in the storage unit 142 for executing programs.

At operation 255, the main control unit 170 re-boots the broadcast receiving apparatus upon completing the storing of the previous programs in the storage unit 142 for executing programs. Upon re-booting, the broadcast receiving apparatus controls the function unit 110 of the broadcast receiving apparatus using the previous programs stored in the storage unit 142 for executing programs.

At operation S260, the sub-control unit 160 determines whether a broadcast reception command is input. However, it should be understood that the broadcast reception command is only one example of user commands that may include many other commands.

Upon receiving a broadcast reception command at operation S260-Y, the sub-control unit 160 packetizes the input broadcast reception command and transmits it to the main control unit 170 at operation S265.

At operation S270, the main control unit 170 controls the function unit 110 using the previous programs stored in the storage unit 142 for executing programs, and the function unit 110 performs its basic function, that is, the function unit 110 outputs received broadcast. More specifically, the main control unit 170 controls the broadcast receiving unit 112 to receive a broadcast signal from a selected channel so that the broadcast signal is processed through the A/V processing unit 118, the audio driving unit 128, and the video driving unit 122, to be output through the display unit 124 and the speaker 130. The main control unit 170 uses the programs stored in the storage unit 142 for executing programs to cause a broadcast of a desired channel to be output.

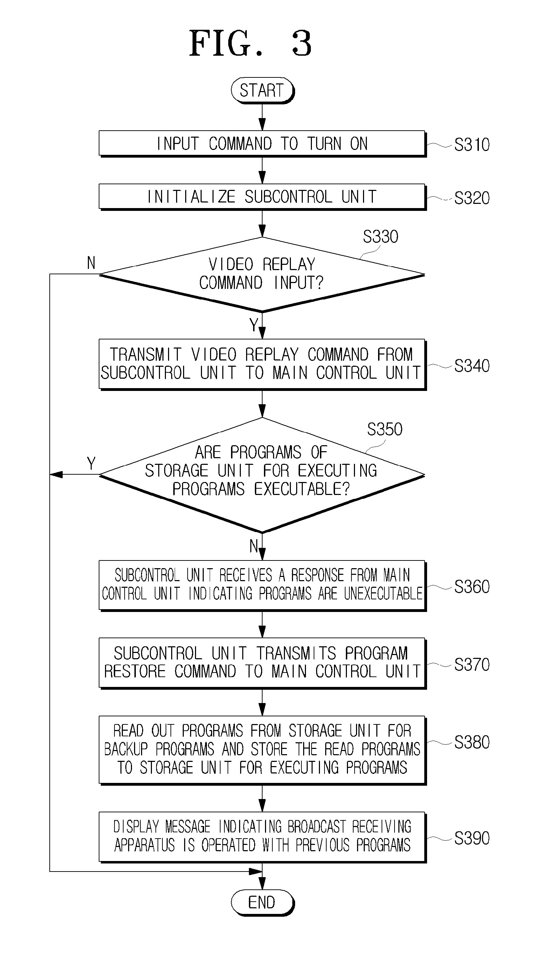

FIG. 3 is a flowchart provided to explain a method for automatically utilizing the previously installed programs if a current program has an error according to another exemplary embodiment of the present invention.

Upon receiving a command to turn on at operation S310, the sub-control unit 160 performs initialization at operation S320. The main control unit 170 also performs initialization, but this will not be explained in the following embodiment for the sake of brevity.

At operation S330, the sub-control unit 160 determines whether a video replay command is input. For example, a user may input a command to turn on the broadcast receiving apparatus, and continue to input a video replay command directly, without knowing whether the broadcast receiving apparatus operates normally or not.

Upon determining that a video replay command is input at operation S330-Y, the sub-control unit 160 transmits the input command to the main control unit 170 at operation S340. For example, the user may input a command to replay a video from an external device connected with the input terminal, in which case the sub-control unit 160 transmits a corresponding video replay command to the main control unit 170.

At operation S350, the main control unit 170 determines whether the current programs stored in the storage unit 142 for executing programs are executable. The main control unit 170 controls the function unit 110 using the stored programs of the storage unit 142 for executing programs in response to a video replay command. However, the main control unit 170 is unable to control the function unit 110 with the current programs, if the current programs contain an error. Accordingly, the main control unit 170 determines that the current programs are not executable. The main control unit 170 is also unable to read the current programs, if the current programs contain an error, and in this case too, determines that the current programs are not executable. If the current programs have an error, the broadcast receiving apparatus does not replay a video, and therefore, the main control unit 170 determines that the current programs are not executable.

At operation S350-N, upon determining that the executing programs are not executable program, the main control unit 170 sends a response indicating that the current programs are not executable to the sub-control unit 160 at operation S360.

Accordingly, at operation S370, the sub-control unit 160 generates a program restore command and transmits the program restore command to the main control unit 170.

At operation S380, the main control unit 170 reads out the previous programs from the storage unit 144 for backup programs in accordance with the program restore command received from the sub-control unit 160, and stores the read previous programs in the storage unit 142 for executing programs. As a result, the previous programs are applied as the executing programs, and the main control unit 170 controls the function unit 110 using the programs stored in the storage unit 142 for executing programs.

At operation S390, the main control unit 170 generates a message indicating that the broadcast receiving apparatus is operated using the previous programs, and displays the generated message on a display area of the display unit 124.

As explained above, the main control unit 170 and the sub-control unit 160 exchange data with each other so that the programs of the storage unit 144 for backup programs are stored in the storage unit 142 for executing programs when the programs stored in the storage unit 142 for executing programs include an error. Automatically upgrading only the unexecutable programs increases user convenience, because the user does not have to backup the programs especially when the cause of an abnormal operation of the broadcast receiving apparatus is other than a program error, such as a hardware problem.

While the sub-control unit 160 determines a user command and transmits it to the main control unit 170 so that the main control unit 170 can store the programs of the storage unit 144 for backup programs into the storage unit 142 for executing programs, it should be understood that this is non-limiting. In an alternative embodiment, the sub-control unit 160 may directly store the programs of the storage unit 144 for backup programs in the storage unit 142 for executing programs.

In another alternative embodiment, the sub-control unit 160 may not be provided to receive a user command. In this example, the main control unit 170 may directly receive a user command to control the function unit 110 accordingly, and to store the programs of the storage unit 144 for backup programs in the storage unit 142 for executing programs.

While two storage units 144 and 142 store backup programs and executing programs are explained as being separated from each other physically, many other alternatives are possible. For example, one memory divided into two regions to store backup and executing programs separately, may be used.

Certain exemplary embodiments have been explained above, in which the programs from the storage unit 144 for backup programs are used to deal with an error of programs being stored in the storage unit 142 for executing programs. In the above explanation, a broadcast receiving apparatus is mentioned as one example of video apparatuses that apply the exemplary embodiments of the present invention. However, one will understand that the above example should not be construed as limiting. For example, other types of video apparatuses, such as a television, a set top box, a DVD player, a DVD recorder, a Video Cassette Recorder (VCR), a multimedia player, a motion picture player, a Compact Disk (CD) player, a CD recorder, an MP3 player, a mobile phone, a Personal Digital Assistant (PDA), an audio system, or a combined form of video apparatus which selectively integrated some of the above, may adequately apply the present invention to use upgraded programs.

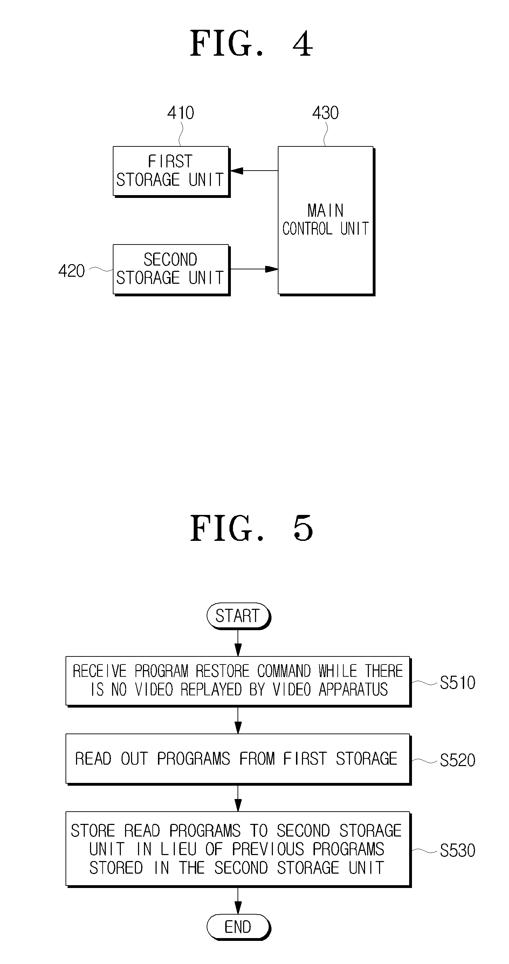

Other examples of the present invention will be explained in detail below with reference to FIGS. 4 and 5. In particular, FIG. 4 illustrates a video apparatus for program restoring according to an exemplary embodiment of the present invention, which includes a first storage unit 410 for backup programs, and a second storage unit 420 for executing programs.

The main control unit 430 reads out programs from the first storage unit 410 and stores the read programs in the second storage unit 420, when a program restore command is received while there is no video being replayed by the video apparatus.

FIG. 5 illustrates a program restore method according to another exemplary embodiment of the present invention, in which a video apparatus includes a first storage unit for backup programs and a second storage unit for executing programs. Referring to FIG. 5, at operation S510, a program restore command is received while there is no video currently replayed on a video apparatus, operation S520, programs are read out from the first storage unit, and at operation S530, the read programs are stored in the second storage unit in lieu of the previous programs of the second storage unit.

Accordingly, backup programs may be used in replaying a video, if executing programs contain an error.

According to the exemplary embodiments of the present invention explained above, user convenience is increased because the user can restore programs even when a video apparatus does not operate normally, by using a panel key or remote controller provided along with the video apparatus.

A user convenience is further increased, as the programs are restored automatically, when a command other than program restore command, such as a command related with the functions of a video apparatus, is received and then an abnormal operation of a video apparatus is determined.

## Claims

1. A video apparatus for replaying a video, comprising:
a first storage unit which stores backup programs;
a second storage unit which stores executing programs; and
a main control unit which reads out programs from the first storage unit and stores the read programs in the second storage unit, if a program restore command is received while there is no video being currently replayed by the video apparatus.

2. The video apparatus of claim 1, further comprising:
a manipulation unit which receives a user command; and
a sub-control unit which transmits the program restore command input through the manipulation unit to the main control unit.

3. The video apparatus of any one of claims 1 and 2, further comprising:
a manipulation unit which receives a user command; and
a sub-control unit which transmits a user command input through the manipulation unit to the main control unit, and generates the program restore command and sends the program restore command to the main control unit if a response to the user command is received from the main control unit indicating that the executing programs stored in the second storage unit contain an error.

4. The video apparatus of any one of claims 1 to 3, further comprising a function unit which replays a video, wherein the main control unit controls the function unit using the executing programs stored in the second storage unit.

5. The video apparatus of any one of claims 1 to 4, wherein the backup programs comprise at least one of a program stored in the first storage at the factory, and a program which is stored in the second storage unit and which contains no error.

6. The video apparatus of any one of claims 1 to 5, wherein the executing programs comprise at least one of a program stored in the first storage the factory, and a program downloaded from an external device.

7. The video apparatus of any one of claims 1 to 6, wherein the video apparatus is a broadcast receiving apparatus.

8. A method for controlling a video apparatus which comprises a first storage unit which stores backup programs, and a second storage unit which stores executing programs, the method comprising:
receiving a program restore command in a state that the video apparatus does not replay a video;
reading out programs from the first storage unit; and
storing the read programs in the second storage unit in replacement of the previous programs of the second storage.

9. The method of claim 8, further comprising replaying the video using the read programs which are stored in the second storage unit.

10. The method of any one of claims 8 and 9, further comprising receiving the program restore command from an external source.

11. The method of any one of claims 8 to 10, further comprising:
receiving a video replay command from an external source;
determining whether the executing programs of the second storage unit contain an error; and
receiving the program restore command if it is determined that the executing programs contain an error.

12. The method of any one of claims 8 to 11, wherein the backup programs comprise at least one of a program stored in the first storage the factory, and a program which is stored in the second storage unit and which contains no error.

13. The method of any one of claims 8 to 12, wherein the executing programs comprise at least one of a program stored in the first storage the factory, or a program downloaded from an external device.
